# EUROPEAN PATENT SPECIFICATION

(11) **EP 4 464 214 B1**
(45) Date of publication and mention of the grant of the patent: **27.08.2025**
(21) Application number: 23173574.7
(22) Date of filing: 16.05.2023
(51) Int. Cl.: A47L 7/00, A47L 9/02, A47L 9/24

(54) **VACUUM CLEANER SUCTION TUBE NOZZLE**
SAUGDÜSE FÜR STAUBSAUGER-SAUGROHR
BUSE DE TUBE D'ASPIRATION POUR ASPIRATEUR

(43) Date of publication of application: 20.11.2024
(73) Proprietor: Lang, Christian, 55116 Mainz (DE)
(72) Inventor: Lang, Christian, 55116 Mainz (DE)
(74) Representative: Lohr, Jöstingmeier & Partner Patent- und Rechtsanwälte mbB

(56) References cited:
- CN-A- 1 203 023
- CN-A- 106 037 587
- CN-A- 113 396 878
- DE-U1- 202017 002 949

## Description

### Field of the invention

The invention relates to a suction pipe nozzle for a vacuum cleaner. The suction pipe nozzle comprises a conduit with a first end. The first end is configured to be connected to the free end of a suction tube of a vacuum cleaner. The conduit further has a second end.

### Description of the related art

Vacuum cleaners are known in the art and used in many households. One generally distinguishes cylinder vacuum cleaners, stick vacuum cleaner, upright vacuum cleaners and vacuum cleaner robots. Except of vacuum cleaner robots, the other types generally have a suction tube with a distal end (the end that points away from the user). Usually, a replaceable nozzle is attached to the distal end during cleaning. Dirt, dust, and the like (jointly "dirt" herein) is sucked via the nozzle into the suction tube and conveyed by an airflow to a dirt reservoir.

DE 20 2017 002 949 U1 and CN 106037587 A disclose a respective vacuum cleaner with a fragmentation unit arranged within a conduit of the vacuum cleaner, the fragmentation unit being movably supported by the conduit.

CN 1203023 A discloses a mosquito killing device with a suction device and a pair of meshes for fragmenting insects sucked in by the suction device, the suction device and the meshes being arranged in a conduit of the mosquito killing de vice. The mosquito killing device may be used as part of a vacuum cleaner.

CN 113396878 A discloses a mosquito killing device with a combined suction and fragmentation unit arranged within a conduit of the mosquito killing device.

### Summary of the invention

The invention is based on the observation that vacuum cleaners are often used to remove insects from places where they are considered disturbing. Some people suffer from insect phobia in general, or kinds thereof, e.g., arachnophobia and some of these fear that insects sucked in by a vacuum cleaner are not killed by the removal process but might be able to escape from the dirt reservoir.

The problem to be solved by the invention is to provide a device that reliably kills insects, in particular spiders.

Solutions of the problem are described in the independent claims. The dependent claims relate to further improvements of the invention.

A solution is provided by a suction tube nozzle or a suction tube extension for a suction tube of a vacuum cleaner. The suction tube nozzle or suction tube extension is preferably configured to be connected to the distal end of a suction tube of a vacuum cleaner. Hereinafter, we will not distinguish between a suction tube nozzle or a suction tube extension, both terms are used interchangeably, i.e., suction tube nozzle shall be understood as suction tube nozzle and/or suction tube nozzle extension and vice versa.

The suction tube nozzle may comprise a conduit having a conduit wall with an inlet opening (hereinafter "inlet") and an outlet opening (hereinafter "outlet"). The conduit wall may enclose a conduit volume extending from the inlet to the outlet. The inlet and the outlet are thus in fluid communication via the conduit volume. The conduit wall has a first end that may define, e.g., by radially delimiting, the inlet and a second end that may define the outlet, e.g., by radially delimiting the outlet. This does not imply that the inlet and outlet are necessarily rotationally symmetric, but that the inlet and the outlet may be delimited by the conduit wall in a radial direction, i.e., in a direction that points radially away from a conduit axis, assuming the conduit is a straight conduit. If the conduit is not straight, the term conduit axis can be replaced by neutral axis. Herein, we will use the term longitudinal axis for conceptional simplicity. It is understood by a person of skill in the art that the term has to be replaced by a more suitable term if the conduit is not straight. The longitudinal axis may be understood as a line that extends from the center of the inlet to the center of the outlet, while being centered with respect to the contour of an inner surface of the conduit.

The second end is preferably configured to be connected to a distal end of a suction tube to thereby provide a fluid communication between the inlet and the suction tube.

If the conduit comprises at least a first rotary bearing with a first rotational axis, which bearing movably supports at least a first rotary blade or a first set of rotary blades in the conduit volume relative to the conduit wall, this (these) rotary blade(s) may be driven to rotate relative to the conduit wall and cut insects sucked in via the inlet into pieces to thereby ensure that only dead insects leave the outlet. The risk of sucking living insects in a dirt reservoir of a vacuum cleaner no longer exists. Insects that have been sucked in via the suction tube nozzle may hence not "escape" from the dirt reservoir and cannot frighten or otherwise harm persons. Herein, we use the term first rotary blade only for conceptual simplicity. The first rotary blade may be a set of first rotary blades, wherein each rotary blade of the set is configured to rotate with the same rotational speed as the other members of the set. For example, the members of the first set of rotary blades may be attached to a first hub.

In a preferred example, the suction tube nozzle comprises a second rotary blade or a second set of rotary blades being as well rotatably supported relative to the housing wall by the first rotary bearing and/or a second rotary bearing. The second rotary blade may comprise the second rotary bearing, which second rotary bearing may have a second rotational axis. At least one of the first rotary bearing and the second rotary bearing may movably support the second rotary blade inside the conduit volume relative to the conduit wall. Like the term first rotary blade shall be understood to mean one first rotary blade or a first set of rotary blades, the term "second rotary blade" shall be understood to mean one "second rotary blade or second set of rotary blades". Again, a set of rotary blades is driven or interconnected to rotate with the same rotational speed.

Preferably, the at least one first rotary blade is a rotary turbine blade having a first direction of rotation based on an assumed gas flow from the inlet through the conduit volume towards the outlet. Thus, when attaching the suction tube nozzle to a suction tube of an operating vacuum cleaner, the airflow through the conduit volume drives the first rotary blade to rotate in the first direction. This keeps cost for the suction tube nozzle low, as no motors, gears or the like are required to operate the first rotary blade. Further, clutches or other means to avoid overstressing the drive train when an insect abruptly slows the rotating rotary blade down can be avoided as well.

The optional second rotary blade may be a rotary turbine blade having a second direction of rotation, based on an assumed gas flow from the inlet through the conduit volume towards the outlet. This second direction of rotation is preferably opposite to the first direction of rotation. Assuming the first rotary blade to be upstream of (i.e., closer to the inlet than) the second rotary blade, particles of an insect that are transported with the airflow have an angular moment pointing in the same direction as the angular momentum of the first rotary blade, because hitting an insect transfers a portion of the rotary blade's angular momentum onto the insect and/or its particles. The relative angular velocity of the second rotary blade to these insects/particles is hence increased and lower mass particles are cut into pieces with a higher probability. In short, the risk that an insect 'passes' the suction tube nozzle without being killed is reduced by the second rotary blade rotating opposite to the first rotary blade. Only to avoid misunderstandings, the same technical effect can be observed in case the second rotary blade is located upstream of the first rotary blade. However, it is of course preferred that the first and the second rotary blades are downstream or upstream of the respective other second or first rotary blade.

As already apparent, the first rotational axis and the second rotational axis are preferably at least essentially identical and/or at least essentially parallel. This measure reduces the pressure gradient between the inlet and the outlet and further contributes to the technical effect of reducing the risk that an insect passes the sequence of rotary blades.

According to the invention, the suction tube nozzle comprises at least one static blade with at least a first and/or a second static cutting edge. In a preferred example the first static cutting-edge faces towards a first rotary cutting edge of the first rotary blade and/or the second static cutting edge faces towards a second rotary cutting edge of the second rotary blade. Face towards each other shall herein be understood to the express that the first static cutting edge provides a (cutting) abutment for an insect being loaded by the first rotary cutting edge. The abutment does not need to prevent any movement, but instead the two cutting edges may form an angle relative to each other. In both cases, cutting insects transported by the airflow from the inlet to the outlet is enhanced. As already apparent, the optional static cutting edge(s) may complement the respective rotary cutting edge(s).

In a preferred example, at least one static blade axially supports the first rotary blade and/or the second rotary blade. This measure provides a reduction of the manufacturing cost and at the same reduces the pressure gradient between the inlet and the outlet and avoids that insects may get stuck at support structures extending in the conduit volume to support the rotary blade(s). In a particular preferred example, the static cutting edge of the at least one static blade provides an axial abutment supporting at least one rotary blade (of the above-mentioned rotary blades). Hence, in operation, the axially supported rotary blade may slide with its rotary cutting edge over the static cutting edge, thereby ensuring that any insect being in between of these cutting edges relatively moving towards each other is reliably cut by these cutting edges.

It is particularly preferred if the at least one static blade radially supports the rotary bearing and/or defines a bearing surface of the rotary bearing. This measure further contributes to reducing manufacturing costs and the flow resistance of the suction tube nozzle.

An axle and/or a shaft may extend in the conduit volume. The axle is preferably radially and/or axially supported by at least one strut extending from the inner wall surface towards the rotational axis of the first rotational bearing and/or the second rotational. The at least one strut can be configured as one of the optional static blades explained above. In other words, at least one strut may be a static blade and/or at least one static blade may be a strut. Accordingly, at least one static blade may extend from the inner wall towards the longitudinal axis and support the axle and/or the shaft radially and/or axially.

The axle may rotatably support the first rotary blade and optionally the second rotary blade, e.g., by the respective rotary bearing. This is a very cost efficient and reliable measure to rotatably support one or more rotary blades in the conduit volume, independently from each other.

Alternatively, a shaft may be rotatably supported in the conduit volume by the first and/or the second rotational bearing and the first rotary blade and/or the second rotary blade may be mounted to the shaft.

The first rotary bearing and/or the second rotary bearing may be a first fluid bearing and/or a second fluid bearing, respectively. Such fluid bearings reduce wear and allow for very high rotational speeds of the correspondingly supported rotary blades.

Preferably, the first fluid bearing and/or the second fluid bearing may comprise a first gas inlet and/or a second gas inlet and a first gas outlet and/or a second gas outlet, respectively. The first gas inlet and/or the second gas inlet may preferably face towards the inlet of the conduit and the first gas outlet and/or the second gas outlet, respectively, may preferably face towards outlet of the conduit. In operation, the pressure gradient between the first gas inlet and/or the second gas inlet and the first gas outlet and/or the second gas outlet, respectively, provides for a gas flow through the respective fluid bearing. Hence, no additional gas source is required to provide the fluid flow being required to operate the fluid bearings.

It is preferred, if at least one of the first rotary blade and/or the second rotary blade and/or the static blade and/or a strut are/is located in between of the first gas inlet and the first gas outlet of the first fluid bearing and/or in between of the second gas inlet and the second gas outlet of the second fluid bearing. *"in between"* references to the respective axial position assuming the conduit to have a longitudinal axis. The blade(s) and/or the strut(s) provide for an increased pressure gradient between the respective gas inlet and gas outlet. Thereby, the gas flow through the fluid bearings is enhanced.

In another example, at least one of the rotational bearings is a plain bearing. A first bearing surface may be attached and/or integrally formed by the first rotary blade and/or the second rotary blade. The complementary other bearing surface may be provided by the peripheral surface of the axle and/or the conduit's wall inner surface, i.e., the surface of the conduit wall that faces towards the longitudinal axis.

Herein, the term *"connection"* and the corresponding verb *"to connect"* shall be understood not only as a mechanical connection, but as well as function enhancing connection. For example, two conduits are connected with each other if the mechanical connection provides for a fluid communication between the two pipes. In the example of a suction pipe and a suction pipe nozzle, a connection of these two elements would allow to suck a fluid via the nozzle inlet into the suction pipe.

Further, as will become apparent below, an expression like b *E A, A =* {*c, d, e, f*} or simply *b* ∈ {*c, d, e, f*} indicates that be b can be selected as appropriate to take any value comprised in the set A.

### Description of Drawings

In the following. the invention will be described by way of example, without limitation of the general inventive concept, on examples of embodiment with reference to the drawings.
- Figure 1: shows a sketch of sectional view of an example suction tube nozzle,
- Figure 2: shows a sketch of cross sectional view the suction tube nozzle along plane A-A indicated in figure 1.

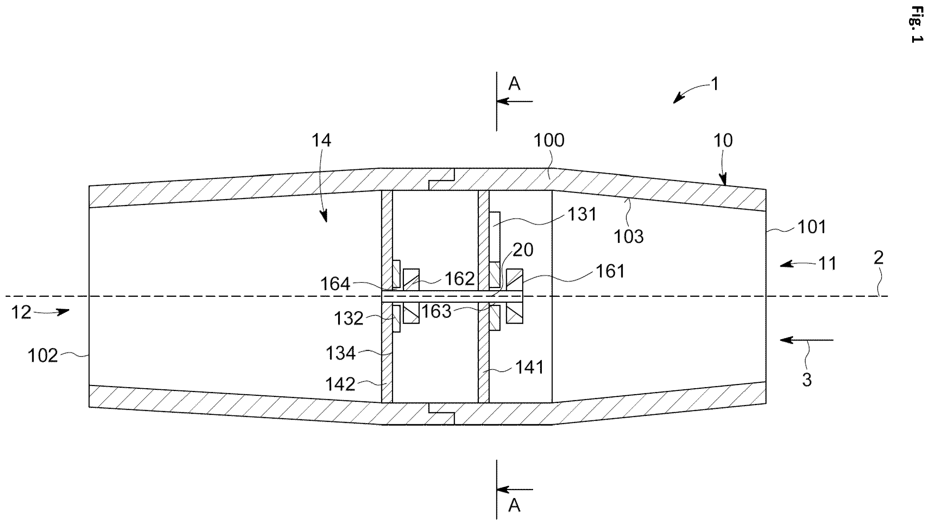

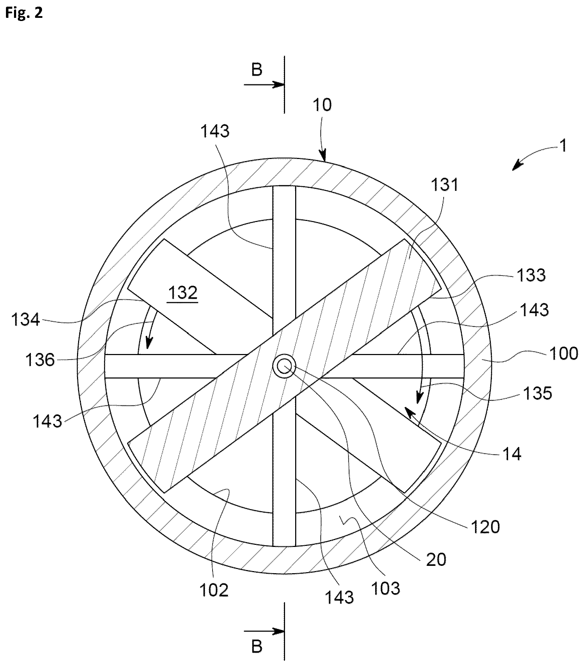

FIG. 1 shows a sketch of longitudinal section along plane B-B as indicated in Fig. 2 of an example suction tube nozzle 1. The suction tube nozzle 1 may comprise a conduit 10 with a longitudinal axis 2. The preferred flow direction is indicated by an arrow 3. The conduit 10 has a conduit wall 100 with an inner wall surface 103, a first end 101 and a second end 102. The first end 101 may radially delimit the inlet opening 11 ("inlet 11") and the second end 102 may radially delimit the outlet opening 12 ("outlet 12"). The terms Inlet 11 and outlet 12 reference to the preferred flow direction 3.

A first set of static blades 141 extends from the conduit wall 100 towards the longitudinal axis 2. In the example (see Fig. 2), four first static blades 141 are shown, but other integer numbers *n*₁ (*n*₁ ∈ {0,1, 2, 3, 4, 5, 6, 7, ...}) are possible as well. A second optional set of *n*₂ second static blades 142, i.e., a second set of static blades 142 extends downstream of the first set of static blades 141 towards the longitudinal axis 2 ((*n*₂ ∈ {0,1, 2, 3,4, 5, 6, 7, ... })).

At least some of the static blades 141, 142, preferably all of them, support an axle 20. The axle 20 is preferably at least essentially aligned with preferred flow direction 3 and/or the longitudinal axis 2. *"At least essentially aligned"* shall indicate that a perfect alignment is preferred but that deviations from perfect alignment within an angle of ±*α_{dev}* can be accepted (*α_{dev}* ∈ {0°, 2.5°, 5°,10°, 15°, 20°, 25°, 30°}, wherein smaller values of *α_{dev}* are preferred).

The axle 20 may rotatably support a first set of rotary blades 131 and/or a second set of rotary blades 132 by corresponding rotary bearings. As shown the two sets of rotary blades 131, 132 may be sets of turbine blades. The two sets of rotary blades 131, 132 may have opposite directions of rotation (see arrows135, 136).

The bearings may be plain bearings, i.e., the peripheral surface of the axle 20 may form a first bearing surface and a recess in the respective set of rotary blades 131, 132 may provide as second plain bearing surface. Of course, the recess may as well be sleeved and in this case the sleeve may provide the respective bearing surface. However, it is preferred, if the bearings are fluid bearings with a gas inlet 161, 162 and a gas outlet 163, 164. Preferably, the gas inlet 161, 162 faces towards the inlet 11 of the conduit 10 and preferably the gas outlet 163, 164 faces in the opposite direction, wherein the gas inlet 161, 162 is preferably in fluid communication with the corresponding gas outlet 163, 154 via a moving gap between the respective rotary blade 131, 132 and the axle 20.

The rotary blades 131, 132 may have cutting edges 133, 134 (cf. FIG. 1 and FIG 2). The cutting edges 133, 134 of the rotary blades 131, 132 may point in the rotational direction 135, 136 of the respective rotary blades 131, 132. The static blades 141, 142 may as well have cutting edges 143, which are preferably pointing in the opposite (rotational) direction than the cutting edges 133, 134 of the corresponding rotary blades 131, 132. In other words, a set of static blades 141,142 and a set of rotary blades 131, 132 may form a pair of interacting blades 131, 132, 141, 142 having cutting edges 133, 134, 143 that face towards each other. As can be seen when comparing FIG. 1 and FIG. 2, it is preferred if the cutting edge(s)s 133, 134 of the rotary blade(s) 131, 132 contact the cutting edge(s) 143 of the corresponding static blade(s) 141, 142. Preferably, the static blades 141, 142 thereby provide an axial support of the corresponding rotary blade(s) 131, 132. This provides a scissor like cutting of insects entering the gap opening and closing between the corresponding cutting edges 133, 134, 143 due to the rotation of the rotary blades 131, 132.

### List of reference numerals

- 1: suction tube nozzle
- 2: longitudinal axis
- 3: flow direction
- 10: conduit
- 11: conduit inlet
- 12: conduit outlet
- 14: conduit volume
- 20: axle
- 100: conduit wall
- 101: first end
- 102: second end
- 103: inner wall surface
- 120: rotary bearing
- 131: first rotary blade(s)
- 132: second rotary blade(s)
- 133: first cutting edge(s) of first rotary blade(s)
- 134: second cutting edge(s) of second rotary blade(s)
- 135: first rotational direction
- 136: second rotational direction
- 141: first static blade(s)
- 142: second static blade(s)
- 143: first static cutting edge(s)
- 144: second static cutting edge(s)
- 161: gas inlet
- 162: gas inlet
- 163: gas outlet
- 164: gas outlet

## Claims

1. A suction tube nozzle (1) comprising at least a conduit (10) with an inlet (11), an outlet (12) and a conduit wall (100) enclosing a conduit volume (14), wherein:
(i) the conduit wall (100) has a first end (101) and a second end (102) and an inner wall surface (103),
(ii) the first end (101) defines the inlet (11), and the second end (102) defines the outlet (12), and
(iii) the second end (102) is configured to be connected to a distal end of a suction tube to thereby provide a fluid communication between the inlet (11) and the suction tube,
(iv) a first rotary bearing with a first rotational axis (2) movably supports at least one first rotary blade (131) inside the conduit volume (14) relative to the conduit wall (100),
**characterized in that**
the suction tube nozzle (1) further comprises a static blade (141, 142) with at least a first and/or a second static cutting edge (143), wherein the first static cutting edge (143) faces towards a first rotary cutting edge (133) of the first rotary blade (131) and/or the second rotary cutting edge (134) faces towards a static cutting edge of the second static blade (142).

2. The suction tube nozzle (1) according to claim 1, **characterized in that** the suction tube nozzle (1) further comprises a second rotary bearing with a second rotational axis (2), and that the second rotary bearing movably supports at least one second rotary blade (132) inside the conduit volume (14) relative to the conduit wall (100).

3. The suction tube nozzle (1) according to claim 1 or 2, **characterized in that** the at least one first rotary blade (131) is a turbine blade having a first rotational direction (135) based on an assumed gas flow (3) from the inlet (11) through the conduit volume (14) towards the outlet (12).

4. The suction tube nozzle (1) according to claims 2 and 3, **characterized in that**
the at least one second rotary blade (132) has a second direction of rotation (136), based on an assumed gas flow (3) from the inlet (11) through the conduit volume (14) towards the outlet (12) and **in that** the second direction of rotation (136) is opposite to the first direction of rotation (135).

5. The suction tube nozzle (1) of any one of claims 2 to 4, **characterized in that**
the first rotational axis (2) and the second rotational axis (2) are identical.

6. The suction tube nozzle (1) of one of the previous claims, **characterized in that** the static blade (141, 142) axially supports the first rotary blade (131) and/or the second rotary blade (132).

7. The suction tube nozzle (1) of one of the previous claims, **characterized in that** the static blade (141, 142) radially supports the rotary bearing and/or defines a bearing surface of the rotary bearing.

8. The suction tube nozzle (1) of one of claims 2 to 7, **characterized in that** an axle (20) extends in the conduit volume (14), wherein the axle (20) is radially and/or axially supported by at least one strut extending from the inner wall surface (103) towards the rotational axis (2) of the first rotational bearing and/or the second rotational bearing, and **in that** the first rotary blade (131) and the second rotary blade (132) are rotatably supported relative to the axle (20).

9. The suction tube nozzle (1) of one of claims 2 to 7, **characterized in that** a shaft is rotatably supported in the conduit volume (104) by the first and/or the second rotational bearing and **in that** the first rotary blade (131) and the second rotary blade (132) are mounted to the shaft.

10. The suction tube nozzle (1) of one of the previous claims, **characterized in that** the first rotary bearing and/or the second rotary bearing are a first fluid bearing and/or a second fluid bearing having a first gas inlet (161) and/or second gas inlet ( 162), respectively, facing towards the inlet (11) and a first gas outlet (163) and/or a second gas outlet (164), respectively, facing towards the outlet (12).

11. The suction tube nozzle (1) of the previous claim, **characterized in that** at least one of the first rotary blade (131) and/or the second rotary blade (132) and/or the static blade (141, 142) are located in between of the first gas inlet (161) and the first gas outlet (163) of the first gas bearing and/or in between of the second gas inlet (162) and the second gas outlet (164) of the second gas bearing.

## Patentansprüche

1. Eine Saugrohrdüse (1), die mindestens eine Leitung (10) mit einem Einlass (11), einem Auslass (12) und einer ein Leitungsvolumen (14) umschließenden Leitungswand (100) aufweist, wobei:
(i) die Leitungswand (100) ein erstes Ende (101) und ein zweites Ende (102) und eine innere Wandfläche (103) aufweist,
(ii) das erste Ende (101) den Einlass (11), und das zweite Ende (102) den Auslass (12) definiert, und
(iii) das zweite Ende (102) so konfiguriert ist, dass es mit einem distalen Ende eines Saugrohrs verbunden werden kann, um dadurch eine Fluidverbindung zwischen dem Einlass (11) und dem Saugrohr bereitzustellen,
(iv) ein erstes Rotationslager mit einer ersten Rotationsachse (2) mindestens eine erste Rotationsklinge (131) innerhalb des Leitungsvolumens (14) relativ zur Leitungswand (100) beweglich lagert,
**dadurch gekennzeichnet, dass** die Saugrohrdüse (1) weiterhin eine statische Klinge (141, 142) mit mindestens einer ersten und/oder einer zweiten statischen Schneidkante (143) aufweist, wobei die erste statische Schneidkante (143) einer ersten Rotationschneidkante (133) der ersten Rotationsklinge (131) zugewandt ist und/oder die zweite Rotationschneidkante (134) einer statischen Schneidkante der zweiten statischen Klinge (142) zugewandt ist.

2. Die Saugrohrdüse (1) nach Anspruch 1, **dadurch gekennzeichnet, dass** die Saugrohrdüse (1) weiterhin ein zweites Rotationslager mit einer zweiten Rotationsachse (2) aufweist, und dass das zweite Rotationslager mindestens eine zweite Rotationsklinge (132) innerhalb des Leitungsvolumens (14) relativ zur Leitungswand (100) beweglich lagert.

3. Die Saugrohrdüse (1) nach Anspruch 1 oder 2, **dadurch gekennzeichnet, dass** die mindestens eine erste Rotationsklinge (131) eine Turbinenschaufel mit einer ersten Rotationsrichtung (135) basierend auf einem angenommenen Gasstrom (3) vom Einlass (11) durch das Leitungsvolumen (149) hin zum Auslass (12) ist.

4. Die Saugrohrdüse (1) nach den Ansprüchen 2 und 3, **dadurch gekennzeichnet, dass** die mindestens eine zweite Rotationsklinge (132) eine zweite Rotationsrichtung (136), basierend auf einem angenommenen Gasstrom (3) vom Einlass (11) durch das Leitungsvolumen (149) hin zum Auslass (12) hat, und dass die zweite Rotationsrichtung (136) gegenläufig zur ersten Rotationsrichtung (135) ist.

5. Die Saugrohrdüse (1) nach irgendeinem der Ansprüche 2 bis 4, **dadurch gekennzeichnet, dass** die erste Rotationsachse (2) und die zweite Rotationsachse (2) identisch sind.

6. Die Saugrohrdüse (1) nach einem der vorhergehenden Ansprüche, **dadurch gekennzeichnet, dass** die statische Klinge (141, 142) die erste Rotationsklinge (131) und/oder die zweite Rotationsklinge (132) axial lagert.

7. Die Saugrohrdüse (1) nach einem der vorhergehenden Ansprüche, **dadurch gekennzeichnet, dass** die statische Klinge (141, 142) das Rotationslager radial lagert und/oder eine Lageroberfläche des Rotationslagers definiert.

8. Die Saugrohrdüse (1) nach einem der Ansprüche 2 bis 7, **dadurch gekennzeichnet, dass** sich im Leitungsvolumen (14) eine Achse (20) erstreckt, wobei die Achse (20) durch mindestens eine Strebe, die sich von der Innenwandfläche (103) in Richtung der Rotationsachse (2) des ersten Rotationslagers und/oder des zweiten Rotationslagers erstreckt, radial und/oder axial gelagert ist, und dass die erste Rotationsklinge (131) und die zweite Rotationsklinge (132) relativ zur Achse (20) rotierbar gelagert sind.

9. Die Saugrohrdüse (1) nach einem der Ansprüche 2 bis 7, **dadurch gekennzeichnet, dass** eine Welle mittels des ersten und/oder des zweiten Rotationslagers im Leitungsvolumen (104) rotierbar gelagert ist und dass die erste Rotationsklinge (131) und die zweite Rotationsklinge (132) an der Welle befestigt sind.

10. Die Saugrohrdüse (1) nach einem der vorhergehenden Ansprüche, **dadurch gekennzeichnet, dass** das erste Rotationslager und/oder das zweite Rotationslager ein erstes Fluidlager und/oder ein zweites Fluidlager mit einem dem Einlass (11) zugewandten ersten Gaseinlass (161) bzw. zweiten Gaseinlass (162) und einem dem Auslass (12) zugewandten ersten Gasauslass (163) bzw. zweiten Gasauslass (164) sind.

11. Die Saugrohrdüse (1) nach dem vorhergehenden Anspruch, **dadurch gekennzeichnet, dass** sich mindestens eine von der ersten Rotationsklinge (131) und/oder der zweiten Rotationsklinge (132) und/oder der statischen Klinge (141, 142) zwischen dem ersten Gaseinlass (161) und dem ersten Gasauslass (163) des ersten Gaslagers und/oder zwischen dem zweiten Gaseinlass (162) und dem zweiten Gasauslass (164) des zweiten Gaslagers befindet.

## Revendications

1. Buse de tube d'aspiration (1) comprenant au moins un conduit (10) avec une entrée (11), une sortie (12) et une paroi de conduit (100) renfermant un volume de conduit (14),
dans laquelle :
(i) la paroi de conduit (100) a une première extrémité (101) et une seconde extrémité (102) et une surface de paroi interne (103),
(ii) la première extrémité (101) définit l'entrée (11) et la seconde extrémité (102) définit la sortie (12), et
(iii) la seconde extrémité (102) est configurée pour être reliée à une extrémité distale d'un tube d'aspiration afin d'assurer ainsi une communication fluidique entre l'entrée (11) et le tube d'aspiration,
(iv) un premier palier rotatif avec un premier axe de rotation (2) supporte de manière mobile au moins une première pale rotative (131) à l'intérieur du volume de conduit (14) par rapport à la paroi de conduit (100),
**caractérisée en ce que**
la buse de tube d'aspiration (1) comprend en outre une pale statique (141, 142) avec au moins un premier et/ou un second bord de coupe statique (143), dans laquelle le premier bord de coupe statique (143) est orienté vers un premier bord de coupe rotatif (133) de la première pale rotative (131) et/ou le second bord de coupe rotatif (134) est orienté vers un bord de coupe statique de la seconde pale statique (142).

2. Buse de tube d'aspiration (1) selon la revendication 1, **caractérisée en ce que** la buse de tube d'aspiration (1) comprend en outre un second palier rotatif avec un second axe de rotation (2), et **en ce que** le second palier rotatif supporte de manière mobile au moins une seconde pale rotative (132) à l'intérieur du volume de conduit (14) par rapport à la paroi de conduit (100).

3. Buse de tube d'aspiration (1) selon la revendication 1 ou 2, **caractérisée en ce que** l'au moins une première pale rotative (131) est une pale de turbine ayant un premier sens de rotation (135) basé sur un écoulement de gaz supposé (3) de l'entrée (11) à travers le volume de conduit (14) vers la sortie (12).

4. Buse de tube d'aspiration (1) selon les revendications 2 et 3, **caractérisée en ce que**
l'au moins une seconde pale rotative (132) a un second sens de rotation (136), basé sur un écoulement de gaz supposé (3) de l'entrée (11) à travers le volume de conduit (14) vers la sortie (12) et **en ce que** le second sens de rotation (136) est opposé au premier sens de rotation (135).

5. Buse de tube d'aspiration (1) selon l'une quelconque des revendications 2 à 4, **caractérisée en ce que** le premier axe de rotation (2) et le second axe de rotation (2) sont identiques.

6. Buse de tube d'aspiration (1) selon l'une des revendications précédentes, **caractérisée en ce que** la pale statique (141, 142) supporte axialement la première pale rotative (131) et/ou la seconde pale rotative (132).

7. Buse de tube d'aspiration (1) selon l'une des revendications précédentes, **caractérisée en ce que** la pale statique (141, 142) supporte radialement le palier rotatif et/ou définit une surface de palier du palier rotatif.

8. Buse de tube d'aspiration (1) selon l'une des revendications 2 à 7, **caractérisée en ce qu'**un essieu (20) s'étend dans le volume de conduit (14), dans laquelle l'essieu (20) est supporté radialement et/ou axialement par au moins une entretoise s'étendant de la surface de paroi interne (103) vers l'axe de rotation (2) du premier palier rotatif et/ou du second palier rotatif, et **en ce que** la première pale rotative (131) et la seconde pale rotative (132) sont supportées de manière rotative par rapport à l'essieu (20).

9. Buse de tube d'aspiration (1) selon l'une des revendications 2 à 7, **caractérisée en ce qu'**un arbre est supporté de manière rotative dans le volume de conduit (104) par le premier et/ou le second palier rotatif et **en ce que** la première pale rotative (131) et la seconde pale rotative (132) sont montées sur l'arbre.

10. Buse de tube d'aspiration (1) selon l'une des revendications précédentes, **caractérisée en ce que** le premier palier rotatif et/ou le second palier rotatif sont un premier palier fluide et/ou un second palier fluide ayant respectivement une première entrée de gaz (161) et/ou une seconde entrée de gaz (162), orientées vers l'entrée (11) et une première sortie de gaz (163) et/ou une seconde sortie de gaz (164), respectivement, orientées vers la sortie (12).

11. Buse de tube d'aspiration (1) selon la revendication précédente, **caractérisée en ce qu'**au moins une parmi la première pale rotative (131) et/ou la seconde pale rotative (132) et/ou la pale statique (141, 142) est située entre la première entrée de gaz (161) et la première sortie de gaz (163) du premier palier à gaz et/ou entre la seconde entrée de gaz (162) et la seconde sortie de gaz (164) du second palier à gaz.
